# EUROPEAN PATENT APPLICATION

(11) **EP 0 597 309 A1**
(43) Date of publication of application: **18.05.1994**
(21) Application number: 93117278.7
(22) Date of filing: 25.10.1993
(51) Int. Cl.: B01D 41/02, B01J 20/34, B01D 24/46

(54) **Method of purification of a filter material used for cleansing of liquids**

(30) Priority: 11.11.1992 FI 925112
(71) Applicant: EKOKEM OY AB, SF-11100 Riihimäki (FI)
(72) Inventor: Remo, Seppo, SF-11120 Riihimäki (FI)
(74) Representative: Pellmann, Hans-Bernd, Dipl.-Ing.

(57) **Abstract**

Method of purification of granual material intended for filtration of liquids, as activated carbon and other materials containing impurities, by directing IR radiation to the material to be purified which possibly is prepurified, whereat the material to be purificated is reactivated. The invention is also concerned with the use of the method for purification of zeolit.

## Description

The invention is concerned with a method of purification of granural material intended for filtration of liquids, as activated carbon and other materials containing impurities.

The invention is furthermore concerned with the use of the method of the invention.

In connection with cleansing of liquids, wherein the liquids are lead through a filter bed, these filters are filled with impurities during the filtration and either have to be changed to new ones or cleansed by recovering the filter bed for reuse.

Activated carbon has to be reactivated after a given time of use as the surface is clogged and the adsorption ability lost.

Conventionally, activated carbon can be regenerated chemically by extracting the impurities off from the pores by suitable solvents or by stripping by superheated steam, whereat the adsorption properties of the consumed activated carbon are returned. The surface of the pores of the carbon is however not oxidated on this way and is thus not reactivated. By now, the only working method of purification of activated carbon and to activate (reactivate) the surface is burning in a suitable temperature (700 - 1200°C). The activation of the carbon surface is controlled for example by the amount of the oxygen of the combustion air and the water steam to be added.

According to the invention of the earlier FI patent application 914038 of the applicant, ultra sound is directed to the material to be purified while it is lead through a basin with washing solution whereat the impurities are loosened from the material to be purified and sink to the bottom of the basin. The material to be purified is thereafter aftertreated by rinsing and drying.

With the method of this patent application, the filter material can in some cases be reactivated fast and efficiently.

The method of this invention is mainly caracterized in that IR radiation is directed to the material to be purified, which possibly has been prepurified, whereat the material to be purified is reactivated.

The advantageous embodiments of the invention have the characteristics of the subclaims.

The invention can also be used e.g. for purification of zeolit.

With the invention, quicker results are achieved than with previously known solutions. The quality of the reactivated activated carbon can be followed with the specific surface (BET) which describes the active surface. The BET surface is the total surface of solid material which is calculated in special conditions from adsorption and desorption data of nitrogen.

The IR method of the invention can be used as such directly to the material to be purified if the surface of the carbon is not completely clogged in which case any prewashing or other pretreating is not needed. This makes the method very simple in these cases.

When necessary, the material to be purified can be prepurified with conventional methods. In one embodiment of the invention the prepurification is carried out with the method of the earlier patent application 914038 of the applicant.

The advantage of the IR method is that it is very fast and simple to carry out as the raise of the pore temperature of the carbon is very fast, e.g. with a carbon bed on a plane or on a wire, at a distance of 5 cm from the IR reflectors, the activating temperature (+400°C... +800°C depending on the carbon quality) is achieved in 6-10 minutes. The layer thickness of the activated carbon is then ca 1 cm.

### Example

In the tests there was use a batchwise solution wherein a 10 kW (power 45 kW/m²) IR heater (from the company IR-T-Finland) was placed on a support with the reflection surface downwards and below that a steel plate of 50 cm x 80 cm at a distance of 5 cm from the IR sender. The activated carbon to be treated was placed on the steel plate of and in form of a layer of 40 cm x 60 cm size and 1 cm thickness. The heater was started and in not more than 9 minutes the inner temperature of the carbon layer reached a sufficient high activating temperature (in this case +480°C). Thereafter the carbon was cooled and returned back to the activated carbon column. The BET surface was measured from the carbon samples taken and it was stated to be 93-95 % compared with the BET surface of new carbon, as the following results show:

| Test | BET surface (m²/g) |
|---|---|
| new activated carbon | 790 |
| consumed activated carbon | 200 |
| reactivated activated carbon | 760 |

Method of purification of granual material intended for filtration of liquids, as activated carbon and other materials containing impurities, by directing IR radiation to the material to be purified which possibly is prepurified, whereat the material to be purificated is reactivated. The invention is also concerned with the use of the method for purification of zeolit.

## Claims

1. Method of purification of granual material intended for filtration of liquids, as activated carbon and other materials containing impurities, **characterized** in that IR radiation is directed to the material to be purified which possibly is prepurified, whereat the material to be purificated is reactivated.

2. Method of claim 1, **characterized** in that the activation to be carried out with IR radiation is carried out in the temperature range of 400-800°C.

3. Method of claim 1 or 2, **characterized** in that the material to be purified is precleansed by directing ultra sound to the material to be purified while it is lead through a basin with washing solution whereat the impurities are loosened from the material to be purified to the washing solution.

4. Use of method of any of claim 1-3 for purification of zeolit.
